(19) Europäisches Patentamt / European Patent Office / Office européen des brevets

(11) **EP 3 263 363 B1**

(12) **EUROPEAN PATENT SPECIFICATION**

(45) Date of publication and mention of the grant of the patent:
**13.07.2022 Bulletin 2022/28**

(21) Application number: **16755322.1**

(22) Date of filing: **18.02.2016**

(51) International Patent Classification (IPC):
**B60C 9/22** *(2006.01)*  **B60C 1/00** *(2006.01)*
**B60C 9/00** *(2006.01)*  **B60C 9/20** *(2006.01)*
**B60C 11/00** *(2006.01)*

(52) Cooperative Patent Classification (CPC):
**B60C 9/005; B60C 1/00; B60C 1/0016; B60C 9/00;**
**B60C 9/2009; B60C 9/22; B60C 11/0008;**
B60C 2009/2214; B60C 2009/2257;
B60C 2009/228; B60C 2009/2285; B60C 2011/0025

(86) International application number:
**PCT/JP2016/054667**

(87) International publication number:
**WO 2016/136575 (01.09.2016 Gazette 2016/35)**

(54) **PNEUMATIC RADIAL TIRE**

RADIALLUFTREIFEN

BANDAGE PNEUMATIQUE RADIAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2015 JP 2015036626**

(43) Date of publication of application:
**03.01.2018 Bulletin 2018/01**

(73) Proprietor: **The Yokohama Rubber Co., Ltd.
Minato-ku
Tokyo 105-8685 (JP)**

(72) Inventor: **NAKAJIMA, Miyuki
Hiratsuka-shi
Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
**JP-A- H09 136 996      JP-A- 2008 087 492
JP-A- 2009 132 329      JP-A- 2010 260 489
JP-A- 2012 030 740      JP-A- 2012 196 983
JP-A- 2013 227 400      US-A- 4 334 567
US-A1- 2008 149 245    US-A1- 2014 011 909**

**Description**

Technical Field

The present invention relates to a pneumatic radial tire, and more particularly relates to a pneumatic radial tire which achieves a reduction in weight while enhancing high-speed durability to or beyond conventional levels.

Background Art

Conventionally, in order to enhance the high-speed durability of a pneumatic radial tire or to reduce road noise, a belt reinforcing layer in which organic fiber cords are wrapped around the outer peripheral side of a belt layer in the tire circumferential direction is provided so as to impart a fastening effect to the belt layer. As organic fiber cords, it has been proposed to use a triple-twisted composite fiber cord or the like consisting of aramid fiber cords and nylon fiber cords (for example, see JP 2011-68275A)

In recent years, there has been a demand to reduce tire weight in order to increase the fuel efficiency of pneumatic radial tires. When the triple-twisted composite fiber cord constituting a belt reinforcing layer is changed to a double-twisted composite fiber cord in order to reduce the weight of a tire, an effect of reducing flat spots and reducing road noise in the medium frequency region can be anticipated. However, when the belt reinforcing layer is formed from a double-twisted composite fiber cord, there are problems in that the fastening effect with respect to the belt layer becomes weak and the high-speed durability is diminished. Therefore, it has been difficult to achieve both reduction in tire weight and high-speed durability with the belt reinforcing layer consisting of a double-twisted composite fiber cord.

Other known pneumatic tires are disclosed in JP 2010-260489A and JP 2012-196983A.

Summary of Invention

Technical Problem

An object of the present invention is to provide a pneumatic radial tire which achieves a reduction in weight while enhancing high-speed durability to or beyond conventional levels.

Solution to Problem

The pneumatic radial tire of the present invention for achieving the object described above is a pneumatic radial tire as defined in claim 1.

Advantageous Effects of Invention

In the pneumatic radial tire of the present invention, the belt reinforcing layer is formed from a double-twisted composite fiber cord including aromatic polyamide fiber and aliphatic polyamide fiber cords, and has the total fineness thereof is from 1800 to 3200 dtex, while the elongation under a load of 2.0 cN/dtex is from 3.0 to 4.0%. The rubber composition for the tread composition is formed by compounding from 10 to 110 parts by weight of a silica having a nitrogen adsorption specific surface area of not less than 100 $m^2/g$ with 100 parts by weight of a diene rubber, and the loss compliance at 60°C is not greater than 45 $Pa^{-1}$. Therefore, it is possible to reduce the weight of the pneumatic radial tire while enhancing the high-speed durability to or beyond conventional levels.

The rubber composition constituting the tread rubber should contain from 50 to 90 wt.% of a terminal-modified solution polymerized styrene butadiene rubber having a styrene unit content of from 30 to 45 wt.% and a vinyl unit content of from 30 to 50 wt.% in 100 wt.% of the diene rubber, and the tensile stress at the time of 100% deformation of the rubber composition at 100°C is preferably not less than 2.0 MPa.

Brief Description of Drawings

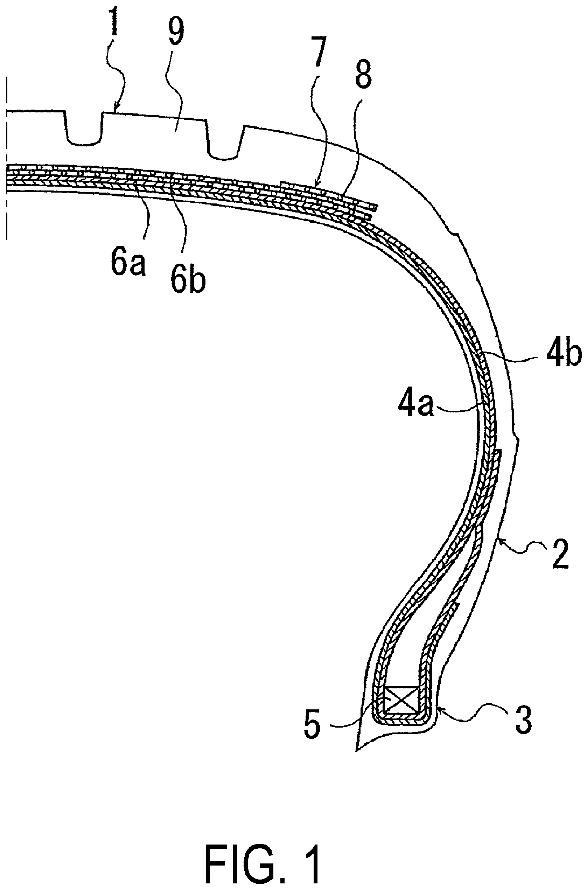

FIG. 1 is a cross-sectional view in a tire meridian direction illustrating an example of a pneumatic radial tire according to an embodiment of the present invention.

Description of Embodiments

The configuration of the present invention will be described hereinafter with reference to the drawings.

In FIG. 1, the pneumatic radial tire of the present invention comprises a tread portion 1, a sidewall portion 2, and a bead portion 3. Carcass layers 4a and 4b are provided between a pair of left and right beads 5, and at least two belt layers 6a and 6b, in which the cord directions intersect between the layers, are disposed on the outer peripheral side of the carcass layers 4a and 4b of the tread portion 1. A belt reinforcing layer 7 formed by winding a composite fiber cord 8 in a spiral shape at an angle of from 0 to 5° with respect to the tire circumferential direction is disposed on the outer peripheral side of the belt layers 6a and 6b. In addition, a tread rubber 9 is disposed on the outer peripheral side of the belt layers 6a and 6b and the belt reinforcing layer 7 of the tread portion 1. The tread rubber 9 is formed from a rubber composition for treads.

In the pneumatic radial tire of the present invention, the composite fiber cord 8 constituting the belt reinforcing layer 7 is formed from a double-twisted fiber cord having one aromatic polyamide fiber cord and one aliphatic polyamide fiber cord twisted therein. By forming the belt reinforcing layer 7 with a double-twisted composite fiber cord, it is possible to reduce the tire weight in comparison to when a triple-twisted composite fiber cord is used. Further, it is possible to reduce medium frequency road noise.

An aromatic polyamide fiber cord ordinarily used in pneumatic radial tires may be used as the aromatic polyamide fiber cord, and an example thereof is an aramid fiber cord.

An aliphatic polyamide fiber cord ordinarily used in pneumatic radial tires may be used as the aliphatic polyamide fiber cord, and examples thereof include a Nylon 66 fiber cord, a Nylon 6 fiber cord, a Nylon 6/66 fiber cord, a Nylon 610 fiber cord, a Nylon 612 fiber cord, a Nylon 46 fiber cord, and the like. Of these, a Nylon 66 fiber cord, a Nylon 46 fiber cord, or the like is preferable.

The total fineness of the composite fiber cord 8 constituting the belt reinforcing layer 7 is from 1800 to 3200 dtex and preferably from 2000 to 2500 dtex. When the total fineness of the composite fiber cord 8 is less than 1800 dtex, the cord strength is insufficient, and the high-speed durability is insufficient. In addition, when the total fineness of the composite fiber cord 8 exceeds 3200 dtex, the tire weight becomes large.

Further, the elongation when a load of 2.0 cN/dtex is applied to the composite fiber cord 8 is from 3.0 to 4.0% and preferably from 3.2 to 3.8%. When the elongation of the composite fiber cord 8 under a load of 2.0 cN/dtex is less than 3.0%, the fatigue resistance of the composite fiber cord is insufficient. When the elongation under a load of 2.0 cN/dtex exceeds 4.0%, the effect of reducing medium frequency road noise is not achieved. In the present specification, the elongation of the composite fiber cord under a load of 2.0 cN/dtex is measured in accordance with JIS L1017 by sampling a composite fiber cord from the pneumatic radial tire. In addition, the elongation of the composite fiber cord under a load of 2.0 cN/dtex can be adjusted by the total fineness, the number of twists, the tension in the fiber cord in the surface treatment step, or the like.

In the pneumatic radial tire of the present invention, the rubber composition constituting the tread rubber (hereinafter sometimes referred to as "rubber composition for treads") is formed by compounding from 10 to 110 parts by weight of a silica having a nitrogen adsorption specific surface area of not less than 100 m$^2$/g with 100 parts by weight of a diene rubber, and the loss compliance of this rubber composition at 60°C needs to be not greater than 45 Pa$^{-1}$.

The rubber component of the rubber composition for treads include a diene rubber. Examples of the diene rubber include natural rubbers, isoprene rubbers, butadiene rubbers, styrene butadiene rubbers, acrylonitrile butadiene rubbers, butyl rubbers, chloroprene rubbers, and the like. These diene rubbers may be used alone or in a desirable blend thereof.

Examples of preferable diene rubbers in the rubber composition for treads include styrene butadiene rubbers, butadiene rubbers, natural rubbers, and the like. Of these, a solution polymerized styrene-butadiene rubber is preferable, and a terminal-modified solution-polymerized styrene butadiene rubber having a styrene unit content of from 30 to 45 wt.% and a vinyl unit content of from 30 to 50 wt.% is particularly preferable. Containing a terminal-modified solution-polymerized styrene butadiene rubber increases the affinity with the silica and enhances the dispersibility of the silica with respect to the diene rubber.

The styrene unit content of the terminal-modified solution-polymerized styrene butadiene rubber is preferably from 30 to 45 wt.% and more preferably from 35 to 45 wt.%. When the styrene unit content is less than 30 wt.%, the effects of increasing the rigidity and the strength of the rubber composition cannot be sufficiently achieved. When the styrene unit content exceeds 45 wt.%, the glass transition temperature (Tg) increases, and the balance of the viscoelastic characteristics becomes poor; thus, it is difficult to achieve the effect of reducing heat build-up. Note that the styrene unit content of the styrene-butadiene rubber is measured by infrared spectroscopy (Hampton method).

In addition, the vinyl unit content of the terminal-modified solution-polymerized styrene butadiene rubber is preferably from 30 to 50 wt.% and more preferably from 30 to 40 wt.%. When the vinyl unit content is less than 30 wt.%, the Tg of the styrene-butadiene rubber becomes low, and the dynamic viscoelasticity characteristic loss tangent (tan $\delta$) at 0°C, which is an indicator of the wet performance, is diminished. When the vinyl unit content exceeds 50 wt.%, the glass transition temperature (Tg) increases, and the tan $\delta$ at 60°C, which is an indicator of low rolling performance, becomes large, thereby diminishing the low rolling performance. Note that the vinyl unit content of the styrene-butadiene rubber is measured by infrared spectroscopy (the Hampton method).

The content of the terminal-modified solution-polymerized styrene butadiene rubber is preferably from 50 to 90 wt.%, more preferably from 60 to 85 wt.%, and further preferably from 65 to 80 wt.% in 100 wt.% of the diene rubber. When the content of the terminal-modified solution-polymerized styrene butadiene rubber is less than 50 wt.% of the diene rubber, the affinity with the silica becomes insufficient.

Since the rubber composition for treads contains silica, the heat build-up is reduced, and high temperatures are suppressed when traveling. This makes it possible to increase the high-speed durability. The compounded amount of the silica is from 10 to 110 parts by weight, preferably from 50 to 100 parts by weight, and more preferably from 60 to 90 parts by weight in 100 parts by weight of the diene rubber. When the compounded amount of the silica is less than 10 parts by weight, the hardness of the rubber composition dramatically decreases, and the rubber of the tread portion becomes more mobile, so the effect of suppressing heat build-up cannot be sufficiently achieved. In addition, when the compounded amount of the silica exceeds 110 parts by weight, the compliance at 60°C increases, and the high-speed durability conversely decreases.

The nitrogen adsorption specific surface area $N_2SA$ of the silica used in the present invention is not less than 100 $m^2/g$, preferably from 100 to 250 $m^2/g$, and more preferably from 150 to 250 $m^2/g$. By setting the $N_2SA$ to not less than 100 $m^2/g$, it is possible to increase the hardness of the rubber composition and suppress the movement of the rubber of the tread portion. The $N_2SA$ of the silica is measured in accordance with JIS K6217-2.

The silica may be any silica that is regularly used in pneumatic radial tires. Examples thereof include wet method silica, dry method silica, surface treated silica, and the like.

In the rubber composition for treads, blending a silane coupling agent together with the silica enhances the dispersibility of the silica, increases the crosslinking density, and increases the hardness, which makes it possible to further reduce heat build-up. The compounded amount of the silane coupling agent is preferably from 5 to 15 wt.% and more preferably from 5 to 10 wt.%, of the compounded amount of the silica. When the compounded amount of the silane coupling agent is less than 5 wt.% of the weight of the silica, the effect of improving the dispersibility of the silica cannot be sufficiently obtained. Furthermore, when the compounded amount of the silane coupling agent exceeds 15 wt.%, the silane coupling agents polymerize with each other, and the desired effects cannot be obtained. Further, buildup on the roll becomes large at the time of the preparation of the rubber composition.

The silane coupling agent is not particularly limited, but is preferably a sulfur-containing silane coupling agent. Examples thereof include bis-(3-triethoxysilylpropyl)tetrasulfide, bis(3-triethoxysilylpropyl)disulfide, 3-trimethoxysilylpropyl benzothiazole tetrasulfide, γ-mercaptopropyltriethoxysilane, 3-octanoylthiopropyl triethoxysilane, and the like.

In the present invention, the loss compliance of the rubber composition for treads at 60°C needs to be not greater than 45 $Pa^{-1}$. By setting the loss compliance at 60°C to not greater than 45 $Pa^{-1}$, it is possible to reduce heat build-up and to enhance high-speed durability. The loss compliance at 60°C is preferably from 20 to 45 $Pa^{-1}$ and more preferably from 25 to 40 $Pa^{-1}$. The loss compliance of the rubber composition for treads can be adjusted by the compounded amount of the silica or the like. In the present specification, the loss compliance L is determined by the following general formula (1).

$$LC = E''/(E^*)^2 \ (1)$$

In formula (1), LC is the loss compliance [units: $Pa^{-1}$], E" is the loss modulus [Pa], and $E^*$ is the complex modulus of elasticity [Pa].

In the present specification, the complex modulus of elasticity $E^*$ and the loss modulus E" of the rubber composition for treads are measured in accordance with the provisions set forth in JIS K6394 using a viscoelastic spectrometer (manufactured by Toyo Seiki Seisaku-sho, Ltd.) under conditions of an initial strain of 10%, an amplitude of ±2%, a frequency of 20 Hz, and a temperature of 60°C.

The tensile stress of the rubber composition for treads at the time of 100% deformation at 100°C is not less than 2.0 MPa and preferably from 2.0 to 3.0 MPa. By setting the tensile stress at the time of 100% deformation at 100°C to not less than 2.0 MPa, it is possible to suppress the repetitive deformation of the rubber composition for treads and to reduce heat build-up. This makes it possible to further increase the high-speed durability of the pneumatic radial tire. In the present specification, the tensile stress at the time of 100% deformation at 100°C is measured in accordance with JIS K6251 by performing a tensile test at 100°C using a No. 3 dumbbell-shaped test piece and measuring the tensile stress at the time of 100% deformation.

In the present invention, other compounding agents in addition to those described above may be added to the rubber composition for treads. Examples of other compounding agents include various compounding agents that are commonly used in pneumatic tires such as reinforcing fillers other than silica, vulcanization or crosslinking agents, vulcanization accelerators, antiaging agents, liquid polymers, thermosetting resins, and thermoplastic resins. These compounding agents can be compounded in typical amounts conventionally used so long as the objects of the present invention are not hindered. In addition, an ordinary rubber kneading machine such as a Banbury mixer, a kneader, or a roll may be used as a kneader.

Examples of other reinforcing fillers include carbon black, clay, mica, talc, calcium carbonate, aluminum hydroxide, aluminum oxide, titanium oxide, and the like. Of these, carbon black is preferable.

The present invention will be described further hereinafter using examples. However, the scope of the present invention is not limited to these examples.

Examples

Rubber compositions for treads (Examples 1 to 3 and Comparative Examples 1 to 4) were prepared according to the formulations shown in Table 1 with the compounding agents shown in Table 2 used as common components. With the exception of the sulfur and the vulcanization accelerators, the components were kneaded in a 1.7 L sealed Banbury mixer, and after a prescribed amount of time passed, the mixture was discharged from the mixer and cooled at room temperature. This was placed in the 1.7 L sealed Banbury mixer, and the sulfur and the vulcanization accelerators were then added to the master batch and mixed to produce a rubber composition for treads. Note that in the rows of "Diene rubber (SBR1, SBR2)" in Table 1, the net compounded amount, except the amount of the oil-extending component, of SBR is written in parentheses in addition to the compounded amount of the product. Furthermore, the compounded amounts of the compounding agents shown in Table 2 are expressed as parts by weight per 100 parts by weight of the diene rubbers shown in Table 1.

The obtained rubber composition for treads was press vulcanized for 20 minutes at 160°C in a prescribed mold (150 mm x 150 mm x 2 mm) to fabricate a vulcanized test piece. The loss compliance and tensile stress (100%, 100°C) were measured in accordance with the following methods.

Loss compliance (60°C)

The vulcanized test piece of the obtained rubber composition for treads was used to measure the complex modulus of elasticity $E^*$ and the loss modulus $E''$ in accordance with JIS K6394:2007 using a viscoelastic spectrometer (manufactured by Toyo Seiki Seisaku-sho, Ltd.) under conditions at an initial strain of 10%, an amplitude of $\pm 2\%$, a frequency of 20 Hz, and a temperature of 60°C, and the loss compliance at 60°C was calculated by formula (1) above. The obtained results are shown in the "Loss compliance" row of Table 1.

Tensile stress (100%, 100°C)

A JIS No. 3 dumbbell shaped test piece was cut out from the obtained vulcanized test pieces in accordance with JIS K6251. The tensile stress at the time of 100% deformation was measured in accordance with JIS K6251 under conditions at a tensile test speed of 500 mm/min and an ambient temperature of 100°C. The obtained results are shown in the "tensile stress (100%, 100°C)" row of Table 1.

Using the rubber composition for treads obtained above as a tread rubber, seven types of pneumatic radial tires (tire size: 215/55R17) having a belt reinforcing layer formed from the rubber composition for treads shown in Table 1 and a composite fiber cord were vulcanization-molded. Note that the structures of the composite fiber cords shown in Table 1 indicates the fineness of the aramid fiber cord and the Nylon 66 fiber cord, and the composite fiber cord of Comparative Example 1 refers to a triple-twist structure comprising 2 aramid fiber cords (1,670 dtex) and one Nylon 66 fiber cord (1,400 dtex). In addition, in the structures of the composite fiber cords of Comparative Examples 2 to 4 and Examples 1 to 3, the first number indicates the fineness (dtex) of the aramid fiber cord, and the second number indicates the fineness (dtex) of the Nylon 66 fiber cord, thus referring to a double-twisted structure.

The high-speed durability was measured with the method described below for the obtained seven types of pneumatic radial tires. In addition, belt reinforcing layers were sampled from the seven types of pneumatic radial tires, and the weight of each belt reinforcing layer and the elongation of the composite fiber cord when a load of 2.0 cN/dtex was applied were measured in accordance with the following evaluation methods.

Elongation under a load of 2.0 cN/dtex

Ten composite fiber cords were sampled from the belt reinforcing layers sampled from the pneumatic radial tires, and the elongation when a load of 2.0 cN/dtex was applied was measured in accordance with JIS L1017. The obtained results are shown in the "Elongation under a load of 2.0 cN/dtex" row of Table 1.

Weight of the belt reinforcing layer

The weight per unit length of the belt reinforcing layer sampled from the pneumatic radial tire was measured. The obtained results were recorded in Table 1 as index values with the value for Comparative Example 1 being defined as 100 and are shown in the "Weight of the belt reinforcing layer" row of Table 1. A smaller index value means that the belt reinforcing layer is lighter and that the weight of the tire can be reduced.

High-speed durability

The obtained pneumatic radial tire was mounted on a standard rim (size: 17x7 JJ) and filled to an air pressure of 230 MPa. This tire was placed in an indoor drum testing machine (drum diameter: 1707 mm), and a high-speed durability test prescribed by JATMA was performed. After this high-speed durability test was complete, the test speed was increased in increments of 50 km/hr. Tests were continued until the tire was destroyed, and the travel distance was measured. The obtained results were recorded in Table 1 as index values with the value for Comparative Example 1 being defined as 100 and are shown in the "High-speed durability" row of Table 1. Larger indices indicate superior high-speed durability.

[Table 1-1]

| | | | Comparative Example 1 | Comparative Example 2 | Comparative Example 3 |
|---|---|---|---|---|---|
| Tread rubber | SBR 1 | parts by weight | 96.3 (70) | 96.3 (70) | 96.3 (70) |
| | SBR 2 | parts by weight | | | |
| | BR | parts by weight | 30 | 30 | 30 |
| | Silica | parts by weight | 70 | 70 | 70 |
| | Coupling agent | parts by weight | 7 | 7 | 7 |
| Cord Composite fiber | Number of fiber cords | cords | 3 | 2 | 2 |
| | Cord structure | dtex | 1670+1670+1400/3 | 800+ 940/2 | 1670+ 1400/2 |
| | Total fineness | dtex | 4740 | 1740 | 3070 |
| Loss compliance (60°C) | | $Pa^{-1}$ | 36 | 36 | 36 |
| Tensile stress (100%, 100°C) | | MPa | 2.0 | 2.0 | 2.0 |
| Elongation under a load of 2.0 cN/ dtex | | % | 2.2 | 4.5 | 4.5 |
| Weight of the belt reinforcing layer | | Index value | 100 | 85 | 88 |
| High-speed durability | | Index value | 100 | 90 | 97 |

[Table 1-2]

|  |  |  |  | Comparative Example 4 | Example 1 | Example 2 | Example 3 |
|---|---|---|---|---|---|---|---|
| Tread rubber | SBR 1 | parts by weight | | 96.3 (70) | 96.3 (70) | 96.3 (70) | |
| | SBR 2 | parts by weight | | | | | 96.3 (70) |
| | BR | parts by weight | | 30 | 30 | 30 | 30 |
| | Silica | parts by weight | | 120 | 70 | 70 | 70 |
| | Coupling agent | parts by weight | | 12 | 7 | 7 | 7 |
| Cord Composite fiber | Number of fiber cords | cords | | 2 | 2 | 2 | 2 |
| | Cord structure | dtex | | 1670+ 1400/2 | 1670+ 1400/2 | 1100+ 940/2 | 1100+ 940/2 |
| | Total fineness | dtex | | 3070 | 3070 | 2040 | 2040 |
| Loss compliance (60°C) | | Pa$^{-1}$ | | 47 | 36 | 36 | 28 |
| Tensile stress (100%, 100°C) | | MPa | | 2.0 | 2.0 | 2.0 | 2.5 |
| Elongation under a load of 2.0 cN/dtex | | % | | 3.5 | 3.5 | 3.5 | 3.5 |
| Weight of the belt reinforcing layer | | Index value | | 83 | 83 | 76 | 76 |
| High-speed durability | | Index value | | 92 | 105 | 104 | 110 |

The types of raw materials used in Table 1 are described below.

- SBR1: Terminal-modified solution-polymerized styrene butadiene rubber, SBR NS460 manufactured by the Zeon Corporation; oil extended product prepared by compounding 37.5 parts by weight of an oil component with 100 parts by weight of a styrene-butadiene rubber; styrene content: 25 wt.%; vinyl unit content: 63 wt.%; weight average molecular weight: 780000
- SBR2: Terminal-modified solution-polymerized styrene butadiene rubber, SBR E581 manufactured by the Asahi Kasei Corporation; oil extended product prepared by compounding 37.5 parts by weight of an oil component with 100 parts by weight of a styrene-butadiene rubber; styrene content: 40 wt.%; vinyl unit content: 44 wt.%; weight average molecular weight: 1.26 million
- BR: Butadiene rubber; Nipol BR1220, manufactured by Zeon Corporation
- Silica: Zeosil 115GR, manufactured by Rhodia; nitrogen adsorption specific surface area: 160 m$^2$/g
- Coupling agent: Sulfur-containing silane coupling agent; bis(3-triethoxysilylpropyl) tetrasulfide, Si 69, manufactured by Evonik

[Table 2]

| Shared Formulation of the Rubber Compositions | | |
|---|---|---|
| Carbon black | 10.0 | parts by weight |
| Stearic acid | 2.0 | parts by weight |
| Zinc oxide | 3.0 | parts by weight |
| Antiaging agent | 3.0 | parts by weight |

(continued)

| Shared Formulation of the Rubber Compositions | | |
|---|---|---|
| Aroma oil | 10.0 | parts by weight |
| Sulfur | 2.0 | parts by weight |
| Vulcanization accelerator 1 | 2.0 | parts by weight |
| Vulcanization accelerator 2 | 1.0 | parts by weight |

The types of raw materials used in Table 2 are shown below.

- Carbon black: SEAST 6, manufactured by Tokai Carbon Co., Ltd.
- Stearic acid: Beads stearic acid, manufactured by NOF Corporation
- Zinc oxide: Zinc Oxide III, manufactured by Seido Chemical Industry Co., Ltd.
- Anti-aging agent: Santoflex 6PPD, manufactured by Flexsys
- Aroma oil: Extract No. 4S, manufactured by Showa Shell Sekiyu K.K.
- Sulfur: "Golden Flower" oil-treated sulfur powder, manufactured by Tsurumi Chemical Industry, Co., Ltd.
- Vulcanization accelerator 1: CBS, NOCCELER CZ-G manufactured by Ouchi Shinko Chemical Industrial Co., Ltd.
- Vulcanization acc elerator 2: DPG, Soxinol D-G manufactured by Sumitomo Chemical Industrial Co., Ltd.

As is clear from Table 1, it was confirmed that the pneumatic radial tires manufactured in Examples 1 to 3 exhibit a reduction in weight in the belt reinforcing layer and have excellent high-speed durability.

In the pneumatic radial tire of Comparative Example 2, the total fineness of the double-twisted composite fiber cord is less than 1800 dtex, and the elongation under a load of 2.0 cN/dtex exceeds 4.0%, so the high-speed durability is poor.

In the pneumatic radial tire of Comparative Example 3, the elongation of the double-twisted composite fiber cord under a load of 2.0 cN/dtex exceeds 4.0%, so the high-speed durability is poor.

In the pneumatic radial tire of Comparative Example 4, the loss compliance of the tread rubber exceeds 45 Pa$^{-1}$, so the high-speed durability is poor.

## Claims

1. A pneumatic radial tire comprising a carcass layer (4a, 4b) mounted between a pair of beads (5), a belt layer (6a, 6b) on an outer peripheral side of the carcass layer (4a, 4b) in a tread portion (1), and a belt reinforcing layer (7) and a tread rubber (9) on an outer peripheral side of the belt layer (6a, 6b);

   the belt reinforcing layer (7) comprising a double-twisted composite fiber cord (8) having one aromatic polyamide fiber cord and one aliphatic polyamide fiber cord twisted therein;
   **characterized in that**
   a total fineness of the composite fiber cord (8) ranges from 1800 to 3200 dtex;
   an elongation under a load of 2.0 cN/dtex ranges from 3.0 to 4.0%;
   a rubber composition constituting the tread rubber (9) is formed by compounding from 10 to 110 parts by weight of a silica having a nitrogen adsorption specific surface area of not less than 100 m$^2$/g with 100 parts by weight of a diene rubber;

   - the rubber composition constituting the tread rubber (9) further contains from 50 to 90 wt.% of a terminal-modified solution polymerized styrene butadiene rubber having a styrene unit content of from 30 to 45 wt.% and a vinyl unit content of from 30 to 50 wt.% in 100 wt.% of the diene rubber;
   - the tensile stress at the time of 100% deformation of the rubber composition at 100°C is not less than 2.0 MPa; and

   a loss compliance of the rubber composition at 60°C is not more than 45 Pa$^{-1}$,
   wherein the loss compliance L is determined by the following general formula;

   $$LC = E''/(E^*)^2$$

wherein LC is the loss compliance in Pa$^{-1}$, E" is the loss modulus in Pa, and E$^*$ is the complex modulus of elasticity in Pa,

wherein the complex modulus of elasticity E$^*$ and the loss modulus E" of the rubber composition are measured in accordance with the provisions set forth in JIS K6394 using a viscoelastic spectrometer under conditions of an initial strain of 10%, an amplitude of $\pm$2%, a frequency of 20 Hz, and a temperature of 60°C and wherein the tensile stress at the time of 100% deformation at 100°C is measured in accordance with JIS K6251 by performing a tensile test at 100°C using a No. 3 dumbbell-shaped test piece and measuring the tensile stress at the time of 100% deformation.

## Patentansprüche

1. Radialluftreifen, umfassend eine Karkassenschicht (4a, 4b), die zwischen einem Wulstpaar (5) angebracht ist, eine Gürtelschicht (6a, 6b) auf einer Außenumfangsseite der Karkassenschicht (4a, 4b) in einem Laufflächenabschnitt (1), und eine Gürtelverstärkungsschicht (7) und einen Laufflächengummi (9) auf einer Außenumfangsseite der Gürtelschicht (6a, 6b);

wobei die Gürtelverstärkungsschicht (7) einen doppelt verdrillten Verbundfasercordfaden (8) mit einem aromatischen Polyamidfasercordfaden und einem darin verdrillten aliphatischen Polyamidfasercordfaden umfasst;

**dadurch gekennzeichnet, dass**

eine Gesamtfeinheit des Verbundfasercordfadens (8) im Bereich von 1800 bis 3200 dtex liegt;

eine Dehnung unter einer Belastung von 2,0 cN/dtex im Bereich von 3,0 bis 4,0 % liegt;

eine Gummizusammensetzung, die den Laufflächengummi (9) bildet, durch Beimischen von 10 bis 110 Gewichtsteilen Silica, das eine stickstoffadsorptionsspezifische Oberfläche von nicht weniger als 100 m2/g aufweist, mit 100 Gewichtsteilen Dienkautschuk gebildet wird;

- die Gummizusammensetzung, die den Laufflächengummi (9) bildet, ferner zu 50 bis 90 Gew.-% einen endständig modifizierten lösungspolymerisierten StyrolButadien-Kautschuk mit einem Styroleinheitgehalt von 30 bis 45 Gew.-% und einem Vinyleinheitgehalt von 30 bis 50 Gew.-% in 100 Gew.-% Dienkautschuk enthält;

- die Zugspannung zum Zeitpunkt von 100 % Verformung der Gummizusammensetzung bei 100 °C nicht weniger als 2,0 MPa beträgt; und

eine Verlustkonformität der Gummizusammensetzung bei 60 °C nicht mehr als 45 Pa$^{-1}$ beträgt, wobei die Verlustkonformität L durch die folgende allgemeine Formel bestimmt wird;

$$LC = E''/(E^*)^2$$

wobei LC die Verlustkonformität in Pa$^{-1}$, E" der Verlustmodul in Pa und E$^*$ der komplexe Elastizitätsmodul in Pa ist,

wobei der komplexe Elastizitätsmodul E$^*$ und der Verlustmodul E" der Gummizusammensetzung gemäß den in JIS K6394 angegebenen Bestimmungen unter Verwendung eines Viskoelastizitätsspektrometers unter Bedingungen einer anfänglichen Dehnung von 10 %, einer Amplitude von $\pm$2 %, einer Frequenz von 20 Hz und einer Temperatur von 60 °C gemessen werden, und

wobei die Zugspannung zum Zeitpunkt von 100 % Verformung bei 100 °C gemäß JIS K6251 gemessen wird, indem ein Zugtest bei 100 °C unter Verwendung eines hantelförmigen Teststücks Nr. 3 durchgeführt wird und die Zugspannung zum Zeitpunkt von 100 % Verformung gemessen wird.

## Revendications

1. Pneumatique radial comprenant une couche de carcasse (4a, 4b) montée entre une paire de talons (5), une couche de ceinture (6a, 6b) sur un côté périphérique externe de la couche de carcasse (4a, 4b) dans une partie bande de roulement (1), et une couche de renfort de ceinture (7) et un caoutchouc de bande de roulement (9) sur un côté périphérique externe de la couche de ceinture (6a, 6b) ;

la couche de renfort de ceinture (7) comprenant un câble de fibres composites doublement torsadé (8) ayant un câble en fibres polyamide aromatique et un câble en fibres polyamide aliphatique torsadés en son sein ;

**caractérisé en ce que**

une finesse totale du câble de fibres composites (8) va de 1800 à 3200 dtex ;

un allongement sous une charge de 2,0 cN/dtex va de 3,0 à 4,0 % ;

une composition de caoutchouc constituant le caoutchouc de bande de roulement (9) est formée en formulant de 10 à 110 parties en poids d'une silice ayant une surface spécifique d'adsorption d'azote qui n'est pas inférieure à 100 m$^2$/g avec 100 parties en poids d'un caoutchouc diénique ;

la composition de caoutchouc constituant le caoutchouc de bande de roulement (9) contient en outre de 50 à 90 % en poids d'un caoutchouc butadiène-styrène polymérisé en solution à terminaison modifiée ayant une teneur en motifs styrène allant de 30 à 45 % en poids et une teneur en motifs vinyle allant de 30 à 50 % en poids dans 100 % en poids du caoutchouc diénique ;

la contrainte de traction au moment d'une déformation à 100 % de la composition de caoutchouc à 100 °C n'est pas inférieure à 2,0 MPa ; et

une complaisance de perte de la composition de caoutchouc à 60 °C n'est pas supérieure à 45 Pa$^{-1}$,

dans lequel la complaisance de perte L est déterminée par la formule générale suivante ;

$$LC = E''/(E^*)^2$$

dans lequel LC est la complaisance de perte en Pa$^{-1}$, E'' est le module de perte en Pa, et E$^*$ est le module d'élasticité complexe en Pa,

dans lequel le module d'élasticité complexe E$^*$ et le module de perte E'' de la composition de caoutchouc sont mesurés conformément aux dispositions présentées dans JIS K6394 en utilisant un spectromètre viscoélastique dans des conditions d'une déformation initiale de 10 %, d'une amplitude de $\pm$2 %, d'une fréquence de 20 Hz, et d'une température de 60 °C et

dans lequel la contrainte de traction au moment d'une déformation à 100 % à 100 °C est mesurée conformément à JIS K6251 en mettant en œuvre un essai de traction à 100 °C en utilisant une pièce de test en forme d'haltère No. 3 et en mesurant la contrainte de traction au moment d'une déformation à 100 %.

FIG. 1

**REFERENCES CITED IN THE DESCRIPTION**

**Patent documents cited in the description**

- JP 2011068275 A
- JP 2010260489 A
- JP 2012196983 A